# EUROPÄISCHE PATENTANMELDUNG

(11) **EP 1 229 277 A1**
(43) Veröffentlichungstag der Anmeldung: **07.08.2002**
(21) Anmeldenummer: 01102091.4
(22) Anmeldetag: 31.01.2001
(51) Int. Cl.: F16K 15/14

(54) **Ventil zur Fluidsteuerung**

(71) Anmelder: FESTO AG & Co, 73734 Esslingen (DE)
(72) Erfinder: Frisch, Herbert, 73035 Göppingen (DE)
(74) Vertreter: Abel, Martin, Dipl.-Ing.

(57) **Zusammenfassung**

Es wird ein zur Fluidsteuerung dienendes Ventil vorgeschlagen, das mindestens eine Ventilscheibe (6) als Ventilglied aufweisen kann, welche mit mindestens einem Ventilsitz (26, 27) zusammenarbeiten kann. Die Ventilscheibe (6) ist mit radialem Abstand zu ihrem Außenumfang (8) durch Stützflächen (13, 14) entlang einer in sich geschlossenen Stützlinie axial abgestützt, so dass sie beim Schaltvorgang eine Kippbewegung bezüglich der Stützlinie ausführt, bei der eine axial entgegengesetzt gerichtete Auslenkung (22, 23) der innerhalb und außerhalb der Stützlinie liegenden inneren und äußeren Ventilscheibenabschnitte (18, 19) stattfindet.

## Beschreibung

Die Erfindung betrifft ein zur Fluidsteuerung dienendes Ventil, das insbesondere auf dem Sektor der Pneumatik eingesetzt werden kann.

Zur Fluidsteuerung verwendete Ventile sind in vielfältigen Varianten bekannt. So beschreibt die DE 3722479 A1 ein als Sitzventil ausgebildetes Magnetventil, dessen Ventilglied als Ventilstößel ausgebildet ist, welcher durch eine Feder in eine erste Schaltstellung vorgespannt ist, aus der er durch Aktivierung eines Elektromagneten in eine zweite Schaltstellung umschaltbar ist. Problematisch bei diesem Ventil sind vor allem die große Bauhöhe und der relativ geringe steuerbare Strömungsquerschnitt.

Aus dem deutschen Gebrauchsmuster 1949004 geht ein Ventil hervor, bei dem das wiederum stößelartige Ventilglied an einer einen Schnappeffekt aufweisenden Membran fixiert ist, um das Schaltverhalten zu unterstützen. Das Ventilglied ist zentral an der Membran befestigt, die ihrerseits am äußeren Rand fixiert wird. Die Membran kann aus Kunststoff bestehen, wobei aber auch eine Ausgestaltung aus Metall erwähnt wird. Wie im Falle der DE 3722479 A1 verfügt das Ventil, in der Schaltrichtung gemessen, über relativ große Abmessungen.

Es ist die Aufgabe der vorliegenden Erfindung, ein Ventil zur Fluidsteuerung zu schaffen, mit dem sich bei kompakten Abmessungen große Strömungsquerschnitte steuern lassen.

Gelöst wird diese Aufgabe mit einem Ventil zur Fluidsteuerung, das mindestens eine Ventilscheibe als Ventilglied aufweist, die mit mindestens einem Ventilsitz zusammenarbeiten kann und die mit radialem Abstand zu ihrem Außenumfang entlang einer in sich geschlossenen Stützlinie axial abgestützt ist, so dass sie beim Schaltvorgang eine Kippbewegung bezüglich der Stützlinie ausführt, wobei eine axial entgegengesetzt gerichtete Auslenkung der innerhalb und außerhalb der Stützlinie liegenden inneren und äußeren Ventilscheibenabschnitte stattfindet.

Auf Grund der Ausgestaltung des Ventilgliedes als Ventilscheibe ermöglicht das erfindungsgemäße Ventil eine sehr flache Bauweise und gestattet bereits bei geringem Schalthub eine Steuerung großer Strömungsquerschnitte. Die Ventilscheibe wirkt auf Grund ihrer zum Außenumfang radial beabstandeten Abstützung wie ein zweiarmiger Hebel, wobei die beiden Hebelarme von dem innerhalb und dem außerhalb der Stützlinie liegenden inneren und äußeren Ventilscheibenabschnitt gebildet sind, so dass die Auslenkung des einen Ventilscheibenabschnittes in die eine Axialrichtung eine gleichzeitige Auslenkung des anderen Ventilscheibenabschnittes in die andere Axialrichtung zur Folge hat. Es liegt auf diese Weise ein Ventilkonzept vor, aufbauend auf dem vielfältige Ventiltypen realisierbar sind, die alle auf dem besonderen Schaltverhalten der Ventilscheibe basieren.

Es besteht beispielsweise die Möglichkeit, das Ventil so auszubilden, dass die Ventilscheibe durch Fluidkraft umschaltbar ist. Dabei bilden die axial orientierten Flächen des inneren oder äußeren Ventilscheibenabschnittes zur Fluidbeaufschlagung vorgesehene Steuerflächen, wobei die angelegte Druckdifferenz den momentanen Schaltzustand vorgibt, der sich insbesondere durch ein Zusammenwirken des jeweils anderen Ventilscheibenabschnittes mit einem Ventilsitz auszeichnet.

Auch eine elektrische Direktbetätigung der Ventilscheibe lässt sich bei Bedarf realisieren. Möglich ist hier beispielsweise eine Ausgestaltung mit elektromagnetisch umschaltbarer Ventilscheibe, wobei die Ventilscheibe zumindest partiell als Anker fungiert. Alternativ oder zusätzlich kann die Ventilscheibe auch piezoelektrisch umschaltbar ausgebildet sein, insbesondere indem sie auf einer oder beiden Axialseiten mit piezoelektrischem Material beschichtet ist.

Ein nach den Prinzipien der Erfindung aufgebautes Ventil kann entweder nur eine Ventilscheibe oder auch mehrere Ventilscheiben enthalten und kann je nach Bedarf als Schaltventil oder als Proportionalventil ausgeführt werden. Es kann sich um ein eigenständiges Ventil handeln oder um ein in eine andere Komponente integriertes Ventil, beispielsweise integriert in einen fluidbetätigten Arbeitszylinder.

In den abhängigen Patentansprüchen sind noch weitere vorteilhafte Ausführungsformen des erfindungsgemäßen Ventils gekennzeichnet.

Besonders vorteilhaft, weil einen symmetrischen Aufbau ermöglichend, ist eine als Kreislinie ausgeführte Stützlinie mit zur Ventilscheibe insbesondere konzentrischer Anordnung.

Zweckmäßig ist es, die Abstützung der Ventilscheibe entlang der Stützlinie durchgehend auszuführen, beispielsweise durch von entgegengesetzten Axialseiten her an der Ventilscheibe anliegende ringförmige Stützflächen. Möglich ist jedoch auch eine unterbrechungsbehaftete Abstützung, beispielsweise derart, dass sich im Bereich der Stützlinie an der Ventilscheibe anliegende Stützflächen aus einzelnen, in Längsrichtung der Stützlinie mit Abstand aufeinanderfolgenden Stützflächenabschnitten zusammensetzen.

Die Ventilscheibe kann durchgehend, über ihre gesamte Scheibenfläche hinweg, geschlossen ausgebildet sein. Ein besseres Verformungsverhalten wird allerdings regelmäßig dann erzielt, wenn die Ventilscheibe zentral gelocht ist, wobei das zentrale Loch, wenn es die zu erfüllende Steuerungsaufgabe erfordert, auch durch einen beispielsweise stopfenartig ausgebildeten Verschlusskörper verschlossen werden kann.

Die Ventilscheibe kann prinzipiell so ausgelegt sein, dass sie im spannungsneutralen Zustand stets nur eine ganz bestimmte Vorzugslage einnimmt und somit auf Grund der Eigenstruktur ein monostabiles Verhalten aufweist. In vielen Fällen vorteilhaft ist allerdings ein ein bistabiles Schaltverhalten bewirkender Aufbau der Ventilscheibe, so dass die Ventilscheibe wahlweise zwei stabile Schaltstellungen einnehmen kann, in denen die Ventilscheibenabschnitte mit Bezug zu einer Mittellage, in der die beiden Ventilscheibenabschnitte in einer gemeinsamen Ebene verlaufen, zu jeweils einer Axialseite ausgelenkt bzw. ausgeknickt sind. Bei einer derartigen Bauweise kann mit einem relativ geringen Betätigungshub auf Grund des auftretenden Schnappeffektes insgesamt ein höherer Schalthub realisiert werden.

Auch bei einer ein bistabiles Schaltverhalten aufweisenden Ventilscheibe kann bei Bedarf ein Ventil mit monostabilem Charakter realisiert werden, indem man durch Federmittel eine ständige Vorspannung in eine der Schaltstellungen bewirkt.

Als besonders zweckmäßig hat sich ein aus mehreren Komponenten bestehender Aufbau der Ventilscheibe erwiesen, wobei ein ringscheibenförmiger Versteifungskörper vorhanden ist, der in eine aus Elastomermaterial oder Gummi bestehende Ummantelung eingebettet ist. Der Versteifungskörper sorgt hier für die gewünschte Biegesteifigkeit und Stabilität der Ventilscheibe, während durch die Ummantelung sehr einfach die gewünschte Außenkontur vorgegeben und unmittelbar die Funktion des Dichtmaterials erfüllt werden kann, das in einer Schaltstellung mit Dichtkontakt an einem Ventilsitz anliegt.

Ein weiterer Vorteil des Ventils besteht darin, dass sich durch die Platzierung der Stützlinie die im Betrieb auf die beiden Ventilscheibenabschnitte einwirkenden Kippmomente nach Bedarf vorgeben lassen. Bei entsprechender Ausgestaltung ist es beispielsweise möglich, einen vollständigen Ausgleich der im Betrieb aus den vorhandenen Druckkräften herrührenden Kippmomente zu schaffen.

Nachfolgend wird die Erfindung anhand der beiliegenden Zeichnung näher erläutert. In dieser zeigen:
- Fig. 1: eine Schnittdarstellung einer ersten Bauform des erfindungsgemäßen Ventils mit einer durch Fluidkraft umschaltbaren Ventilscheibe, wobei die Ventilscheibe im Querschnitt gemäß Schnittlinie I-I aus Fig. 2 abgebildet ist und wobei strichpunktiert eine mögliche Integration des Ventils in einen Arbeitszylinder angedeutet ist,
- Fig. 2: eine Einzeldarstellung der Ventilscheibe des Ventils gemäß Fig. 1 im Schnitt entlang der Scheibenebene gemäß Schnittlinie II-II,
- Fig. 3: eine weitere Bauform des erfindungsgemäßen Ventils in einer der Fig. 1 entsprechenden Schnittdarstellung und mit zur elektromagnetischen Betätigung ausgelegter Ventilscheibe,
- Fig. 4: eine weitere Ausführungsform eines Ventils mit elektromagnetisch umschaltbarer Ventilscheibe, wobei allerdings die Ankerfunktion der Ventilscheibe dem äußeren Ventilscheibenabschnitt zugeordnet ist, während diese bei der Ausführungsform gemäß Fig. 3 vom inneren Ventilscheibenabschnitt übernommen wird,
- Fig. 5: wiederum in einer Längsschnittdarstellung eine weitere Ausführungsform des erfindungsgemäßen Ventils mit einer piezoelektrisch umschaltbaren Ventilscheibe und wie im Falle der Bauform gemäß Fig. 3 und 4 in einer Ausführungsform als 4/2-Wegeventil,
- Fig. 6 und 7: eine weitere Ausführungsform des erfindungsgemäßen Ventils in unterschiedlichen Betätigungszuständen, wobei eine Ausstattung mit zwei Ventilscheiben vorgesehen ist, um eine 3/3-Wege-Proportionalventilfunktion zu realisieren, und
- Fig. 8 bis 10: eine weitere Ausführungsform eines als Proportionalventil ausgebildeten erfindungsgemäßen Ventils, wobei die Schaltbewegung durch Fluidkraft hervorgerufen wird.

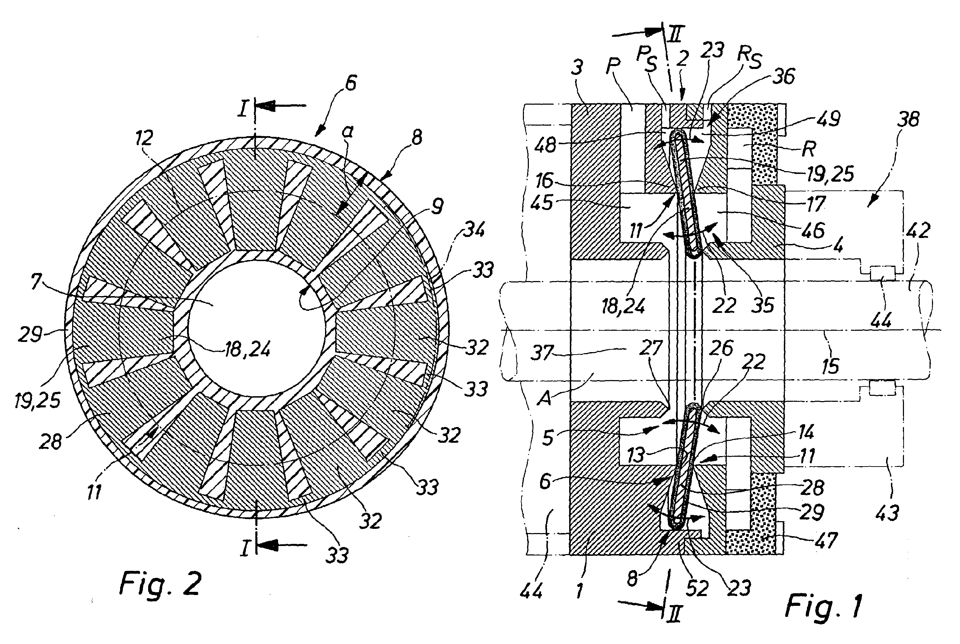

Zunächst sei anhand der Fig. 1 und 2 die grundsätzliche Funktionsweise des erfindungsgemäßen Ventils erläutert, wobei in den später abgehandelten restlichen Figuren entsprechende Bestandteile mit identischen Bezugszeichen versehen sind.

Das Ventil gemäß Fig. 1 und 2 verfügt über ein Ventilgehäuse 1, das im wesentlichen aus zwei in einem Fügebereich 2 unter Abdichtung aneinandergesetzten und fest miteinander verbundenen Gehäusekörpern 3, 4 besteht. Die Gehäusekörper 3, 4 sind insbesondere plattenartig ausgebildet, wobei ihre größeren Plattenflächen einander zugewandt sind.

Im Innern des Ventilgehäuses 1 befindet sich eine allgemein mit Bezugsziffer 5 bezeichnete Ventilkammer. In ihr ist ein Ventilglied untergebracht, das eine scheibenförmige Gestalt hat und daher als Ventilscheibe 6 bezeichnet wird. In Fig. 2 ist die Ventilscheibe 6 nochmals in Einzeldarstellung ohne das sie umgebende Gehäuse abgebildet.

Die Ventilscheibe 6 hat zweckmäßigerweise eine kreisförmige Außenkontur. Sie ist nach Art einer Lochscheibe ausgebildet und verfügt über ein zentrales Loch 7. Auch letzteres ist zweckmäßigerweise kreisförmig konturiert, so dass sowohl der radial nach außen orientierte Außenumfang 8 als auch der radial nach innen orientierte Innenumfang 9 der Ventilscheibe 6 einen kreisförmigen Verlauf hat, wobei eine konzentrische Anordnung vorliegt.

Die Dicke der Ventilscheibe 6 ist im Verhältnis zur radialen Breite relativ gering.

Die Ventilscheibe 6 ist derart in der Ventilkammer 5 platziert, dass sie entlang einer mit radialem Abstand "a" zum Außenumfang 8 angeordneten, in sich geschlossenen Stützlinie 12 axial bezüglich dem Ventilgehäuse 1 unbeweglich abgestützt ist. Die Stützlinie 12 ist bevorzugt eine Kreislinie, die einen Kreis mit einem im Vergleich zum Außenumfang 8 geringeren Durchmesser beschreibt und konzentrisch zur Ventilscheibe 6 und somit zum Außenumfang 8 und zum Innenumfang 9 angeordnet ist.

Die axiale Abstützung erfolgt von entgegengesetzten Axialseiten her, so dass die Ventilscheibe 6 im Bereich der Stützlinie 12 axial unbeweglich eingespannt ist. Zur axialen Abstützung sind zwei kreisförmig in sich geschlossene Stützflächen 13, 14 vorgesehen, die konzentrisch zur Mittelachse 15 der Ventilscheibe 6 angeordnet sind, und zwar auf einander entgegengesetzten Axialseiten der Ventilscheibe 6. Zweckmäßigerweise haben sie den gleichen Abstand von der Mittelachse 15, so dass sie sich axial gegenüberliegen.

Die Stützflächen 13, 14 sind am Ventilgehäuse 1 vorgesehen, insbesondere als einstückiger Bestandteil desselben, wobei an jedem Gehäusekörper 3, 4 eine der Stützflächen 13, 14 ausgebildet ist.

Wie aus Fig. 1 hervorgeht, sind die Stützflächen 13, 14 vorzugsweise von gehäusefesten ringförmigen Stützvorsprüngen 16, 17 gebildet, die im Fügebereich 2 zur Ventilscheibe 6 ragen und diese mit einer Kante linienartig in einem sehr schmalen Bereich beaufschlagen.

Durch die axiale Einspannung wird die Ventilscheibe 6 in einen radial innerhalb der Stützlinie 12 liegenden inneren Ventilscheibenabschnitt 18 und einen radial außerhalb der Stützlinie 12 liegenden äußeren Ventilscheibenabschnitt 19 unterteilt. Dabei bilden die Stützvorsprünge 16, 17 im Kontaktbereich mit der Ventilscheibe 6 eine Art Kipplager 11, das eine Kippbewegung der Ventilscheibe 6 um eine der Stützlinie 12 folgende Kippachse zulässt. Bei dieser Kippbewegung findet eine axial entgegengesetzt gerichtete gleichzeitige Auslenkung des inneren (18) und des äußeren (19) Ventilscheibenabschnittes statt. Die Auslenkbewegung des inneren Ventilscheibenabschnittes 18 ist durch Doppelpfeile 22, die Auslenkbewegung des äußeren Ventilscheibenabschnittes 19 durch Doppelpfeile 23 verdeutlicht.

Die Ventilscheibe 6 verhält sich also wie ein zweiarmiger Hebel, allerdings nicht mit geradliniger Schwenkachse, sondern mit ringförmig geschlossenem Verlauf derselben. Es versteht sich, dass der Aufbau der Ventilscheibe 6 hierbei so getroffen ist, dass ausreichende Biegesteifigkeit besteht, um das Bewegungsverhalten der beiden Ventilscheibenabschnitte 18, 19 in der geschilderten Weise zu koppeln. Wird auf einen der beiden Ventilscheibenabschnitte 18, 19 im Sinne dessen möglicher Auslenkbewegung eine Stellkraft ausgeübt und der betreffende Ventilscheibenabschnitt demzufolge ausgelenkt, hat dies gleichzeitig eine entgegengesetzt gerichtete Auslenkbewegung des biegesteif verbundenen anderen Ventilscheibenabschnittes zur Folge. Dieses Verhalten wird ausgenutzt, um einen gewünschten Schaltvorgang der Ventilscheibe 6 zu realisieren.

Das Ventil gemäß Fig. 1 und 2 arbeitet, wie im übrigen auch die anderen in der Zeichnung abgebildeten Ventile, als Sitzventil. Gemäß Fig. 1 und 2 bildet der innere Ventilscheibenabschnitt 18 einen zur Steuerung von Fluidströmen dienenden Steuerabschnitt 24 und der äußere Ventilscheibenabschnitt 19 einen zum Hervorrufen der Schaltbewegung der Ventilscheibe 6 dienenden Betätigungsabschnitt 25.

Dem Steuerabschnitt 24 liegt auf beiden Axialseiten ein koaxial zur Ventilscheibe 6 angeordneter erster bzw. zweiter Ventilsitz 26, 27 gegenüber. Die beiden Ventilsitze 26, 27 sind ringförmig und vorzugsweise kreisringförmig ausgebildet und haben zweckmäßigerweise im wesentlichen den gleichen Durchmesser. Ihr axialer Abstand zueinander ist größer als die Dicke des Steuerabschnittes 24 der Ventilscheibe 6, und der Ventilsitzdurchmesser ist etwas größer als der Durchmesser des Innenumfanges 9 der Ventilscheibe 6.

Somit kann die Ventilscheibe 6 im Rahmen eines Schaltvorganges zwischen zwei End-Schaltstellungen umgeschaltet werden, in denen der Steuerabschnitt 24 mit seinen axial gerichteten Scheibenflächen entweder am ersten Ventilsitz 26 anliegt (erste End-Schaltstellung; in Fig. 1 dargestellt) oder am zweiten Ventilsitz 27 zur Anlage gelangt (zweite End-Schaltstellung; nicht dargestellt).

Die beiden End-Schaltstellungen zeichnen sich dadurch aus, dass die Ventilscheibe 6 eine entweder zum ersten Ventilsitz 26 oder zum zweiten Ventilsitz 27 hin ausgewölbte, kegelstumpfähnliche Gestalt aufweist. Beim Umschalten durchläuft die Ventilscheibe 6 eine Mittelstellung, bei der sie in einer zur Mittelachse 15 senkrechten Ebene ausgerichtet ist. Die Anordnung ist vorzugsweise so getroffen, dass die Mittelstellung eine Totpunktstellung ist, aus der ein schnappendes Umschalten in die erste oder zweite End-Schaltstellung erfolgt, sobald eine geringfügige Auslenkung in die entsprechende Richtung hervorgerufen wurde.

Das Umschalten der Ventilscheibe 6 zwischen den beiden End-Schaltstellungen wird durch Aufbringen einer entsprechenden Betätigungskraft auf den Betätigungsabschnitt 25 hervorgerufen. Auf Grund des erläuterten Schnappeffektes genügt es dabei, den Betätigungsabschnitt 25 geringfügig über die Mittelstellung hinwegzubewegen, worauf die restliche Schaltbewegung selbsttätig ausgeführt wird.

Man könnte die Ventilscheibe 6 auf Grund des geschilderten Bewegungsverhaltens auch als Schnappscheibe bezeichnen.

Das zuvor geschilderte bistabile Schaltverhalten resultiert aus einem entsprechenden Aufbau der Ventilscheibe 6. So hat die Ventilscheibe 6 für sich allein betrachtet, also im nicht installierten Zustand, zwei mechanisch spannungsneutrale Zustände, in denen die Ventilscheibenabschnitte 18, 19 entweder zur einen oder zur anderen Seite ausgelenkt sind und die Ventilscheibe 6 eine kegelstumpfähnlich ausgewölbte Gestalt einnimmt. Die beiden Ventilsitze 26, 27 sind derart zueinander beabstandet, dass der zwischen sie hineinragende Steuerabschnitt 24 an ihnen in der jeweiligen End-Schaltstellung zur Anlage gelangt, bevor der mechanisch spannungsneutrale Zustand vorliegt. Auf diese Weise ergibt sich eine eigenständige Vorspannung in die jeweilige End-Schaltstellung.

An dieser Stelle sei darauf hingewiesen, dass das erfindungsgemäße Funktionsprinzip auch mit einer Ventilscheibe 6 realisiert werden kann, die den Schnappeffekt nicht aufweist und lediglich eine Vorzugslage besitzt. Auf diese Weise kann beispielsweise ein monostabiles Verhalten realisiert werden, wenn die Ventilscheibe 6 auf Grund der inneren mechanischen Spannungen ständig in Richtung ein und derselben End-Schaltstellung vorgespannt ist und nach beliebiger Auslenkung in diese zurückkehrt.

Es ist auch eine Ausgestaltung möglich, bei der die Ventilscheibe 6 im mechanisch spannungsneutralen Zustand eine ebene, zu keiner Seite ausgewölbte Gestalt einnimmt und nach dem Auslenken in die eine oder andere Richtung wieder in diese Mittelstellung zurückkehrt, nachdem die Stellkraft entfernt worden ist.

Die gewählte Ausgestaltung der Ventilscheibe 6 hängt insbesondere vom zu realisierenden Ventiltyp ab.

Das gewünschte Schaltverhalten kann der Ventilscheibe 6 insbesondere im Rahmen eines Mehrkomponenten-Aufbaues aufgeprägt werden, wie er bei den Ausführungsbeispielen realisiert ist. Hier enthält die Ventilscheibe einen Flachgestalt aufweisenden ringscheibenförmigen Versteifungskörper 28, der in eine flexible Ummantelung 29 eingebettet ist. Der Versteifungskörper 28 besteht aus federelastischem Material und dabei insbesondere aus Metall, beispielsweise Stahl. Die Ummantelung 29 ist eine verhältnismäßig dünne Schicht, die den Versteifungskörper 28 insbesondere vollständig umhüllt und die beispielsweise aus Elastomermaterial oder Gummi besteht.

Verantwortlich für die im spannungsneutralen Zustand eingenommene Gestalt und das Verformungsverhalten bei der Ventilscheibe 6 ist der als Feder wirkende Versteifungskörper 28. Die Ummantelung 29 dient beim Ausführungsbeispiel dazu, die komplexe Struktur des Versteifungskörpers 28 zu stabilisieren, und hat ferner die Funktion eines Dichtkörpers, der beim Kontakt mit den gehäuseseitigen Ventilsitzen 26, 27 das gewünschte Dichtverhalten gewährleistet. Darüber hinaus begünstigt die nachgiebige Ummantelung 29 die fluiddichte Einspannung der Ventilscheibe 6 zwischen den Stützflächen 13, 14.

Beim Ausführungsbeispiel besteht der Versteifungskörper 28 aus einer Vielzahl in der Umfangsrichtung der Ventilscheibe 6 mit Abstand zueinander benachbarter Versteifungsarme 32, deren Längsrichtung radial verläuft, wobei jeweils unmittelbar benachbarte Versteifungsarme 32 durch einen Verbindungssteg 33 einstückig miteinander verbunden sind. Sämtliche Verbindungsstege 33 liegen zweckmäßigerweise auf einer zur Stützlinie 12 konzentrischen, in Fig. 2 nur mit einem Teilabschnitt dargestellten Kreislinie 34, die vorzugsweise am äußeren radialen Randbereich des Versteifungskörpers 28 liegt. Die Versteifungsarme 32 können im Bereich der Kreislinie 34 eine maximale Breite haben und sich zum nach radial innen weisenden freien Ende hin verschmälern. Auf diese Weise wird eine gegenseitige Behinderung vermieden.

Die Versteifungsarme 32 sind unabhängig voneinander in Richtung des Auslenkbewegung 22 verbiegbar, werden jedoch durch die sie umhüllende Ummantelung 29, welche auch durch die zwischen benachbarten Versteifungsarmen 32 befindlichen Zwischenräume hindurchtritt, zusammengehalten.

Um ein vom Ausführungsbeispiel abweichendes Bewegungsverhalten zu erzielen, können die Verbindungsstege 33 alternativ auch auf einer Kreislinie 34 angeordnet werden, die mit größerem Abstand radial innerhalb des Außenumfanges des Versteifungskörpers 28 verläuft.

Auf Grund der elastischen Ummantelung ergibt sich im Kontaktbereich zwischen der Ventilscheibe 6 und einer jeweiligen Stützfläche 13, 14 eine dichte Verbindung. Auf diese Weise wird die Ventilkammer in eine den Steuerabschnitt 24 enthaltende Steuerkammer 35 und eine die Steuerkammer 35 konzentrisch umgebende, den Betätigungsabschnitt 25 enthaltende Betätigungskammer 36 unterteilt. Innerhalb der Steuerkammer 35 umgrenzen die sich gegenüberliegenden Ventilsitze 26, 27 einen Zentralraum 37, der bei dem Ventil gemäß Fig. 1 und 2 einen mit einem Verbraucher verbindbaren Arbeitskanal A bildet. Dieser durchsetzt beim Ausführungsbeispiel das Ventilgehäuse 1, das hier als integraler Bestandteil des Lagerdeckels eines teilweise stichpunktiert angedeuteten fluidbetätigten Arbeitszylinders 38 ausgebildet ist. Dabei wird der Arbeitskanal A von der Kolbenstange 42 des Arbeitszylinders 38 durchsetzt, wobei die Abdichtung zur Umgebung hin mittels eines zwischen dem Lagerdeckel 43 und der Kolbenstange 42 wirksamen Dichtringes 44 bewirkt wird. Auf der axial entgegengesetzten Seite mündet der Arbeitskanal A in die sich anschließende Zylinderkammer 44, die hier den abwechselnd mit Druckmedium beaufschlagbaren und entlüftbaren Verbraucher repräsentiert.

Es sei an dieser Stelle darauf hingewiesen, dass bei konventionellem Einsatz des Ventils einer der Gehäusekörper im Bereich des Arbeitskanals A zweckmäßigerweise verschlossen ist, so dass nur eine Anschlussöffnung für den Arbeitskanal A vorliegt.

Radial außerhalb der Ventilsitze 26, 27 wird die Steuerkammer 35 durch den Steuerabschnitt 24 in zwei sich axial gegenüberliegende Ringräume 45, 46 unterteilt. Der erste Ringraum 45 bildet einen mit einer Druckquelle zu verbindenden Speisekanal P, der zweite Ringraum 46 einen bei pneumatischen Anwendungen mit der Atmosphäre verbindbaren Entlüftungskanal R. Wie abgebildet, kann in den Verlauf des Entlüftungskanals R ein Schalldämpfer 47 eingeschaltet sein.

Entsprechend der jeweils vorliegenden End-Schaltstellung wird bei dem Ventil gemäß Fig. 1 und 2 entweder der Speisekanal P mit dem Arbeitskanal A unter gleichzeitiger Abtrennung des Entlüftungskanals R verbunden, oder es erfolgt eine Verbindung zwischen dem Arbeitskanal A und dem Entlüftungskanal R bei gleichzeitiger Abtrennung des Speisekanals P. Es handelt sich somit um eine 3/2-Ventilfunktion.

Die Betätigungskammer 36 wird durch den Betätigungsabschnitt 25 ebenfalls in zwei axial beidseits des Betätigungsabschnittes 25 liegende Ringräume 48, 49 unterteilt, von denen der eine mit einem ersten Steuerkanal P_{S} und der andere mit einem zweiten Steuerkanal R_{S} in Verbindung steht. Zur besseren Unterscheidung seien diese Ringräume nachfolgend als dritter und vierter Ringraum 48, 49 bezeichnet. Entsprechend der gesteuerten Druckbeaufschlagung der beiden Ringräume 48, 49, die auf die einander entgegengesetzten Flächen des äußeren Ventilscheibenabschnittes 19 wirkt, ergibt sich eine resultierende Stellkraft, die die Auslenkbewegung 23 hervorruft, was wiederum die das Umschalten der Ventilscheibe 6 bewirkende Kippbewegung verursacht. Beim Schaltvorgang wird die auch als tellerartig beschreibbare Ventilscheibe 6 bezüglich eines radial zwischen dem Außenumfang 8 und dem Innenumfang 9 liegenden, axial fixierten Bereiches (Kipplager 11) quasi umgestülpt.

Das Ventil gemäß Fig. 1 und 2 ermöglicht eine Betriebsweise, bei der der zweite Steuerkanal R_{S} ständig entlüftet ist. Dabei wird die Ventilscheibe 6 durch den am Speisekanal P anstehenden Speisedruck in der aus Fig. 1 hervorgehenden End-Schaltstellung gehalten, in der der Steuerabschnitt 24 am ersten Ventilsitz 26 anliegt. Das Umschalten in die andere End-Schaltstellung wird durch Beaufschlagung des ersten Steuerkanals P_{S} mit einem Steuerdruck bewirkt, wobei die sich dann einstellende andere End-Schaltstellung so lange beibehalten bleibt, bis der Steuerdruck wieder entfernt wird.

Die gegenseitige dichte Abtrennung der beiden Ringräume 48, 49 innerhalb der Betätigungskammer 36 wird zum einen durch den schon erwähnten Dichtkontakt zwischen den Stützflächen 13, 14 und der Ventilscheibe 6 bewirkt und zum anderen durch einen dynamischen Dichtkontakt zwischen dem Außenumfang 8 der Ventilscheibe 6 und der diese umschließenden umfangsseitigen Wandung 52 der Ventilkammer 5. Dabei kann die Ventilscheibe 6 zur Optimierung der Abdichtung mit einer oder mehreren an der Innenfläche der Wandung 52 gleitverschieblich anliegenden Dichtlippen ausgestattet sein. Auch eine statische Abdichtung mittels einer an der Ventilscheibe 6 und am Ventilgehäuse 1 angebrachten flexiblen Membran wäre möglich.

Kurz zusammengefasst, verfügt das Ventil gemäß Fig. 1 und 2 über eine Bauform mit durch Fluidkraft umschaltbarer Ventilscheibe 6, wobei die axial orientierten Flächen des äußeren Ventilscheibenabschnittes 19 zur Fluidbeaufschlagung vorgesehene Betätigungsflächen bilden. Denkbar wäre allerdings auch eine umgekehrte Anordnung, bei der die Betätigungsflächen am inneren Ventilabschnitt 18 vorgesehen sind und der äußere Ventilabschnitt 19 einen zur Steuerung von Fluidströmen dienenden Steuerabschnitt 24 bildet.

Das Ventil gemäß Fig. 1 und 2 ist als Schaltventil konzipiert, das wahlweise eine der beiden End-Schaltstellungen einnehmen kann. Eine Ausgestaltung als Proportionalventil mit bigen Zwischenstellungen zwischen den beiden End-Schaltstellungen wäre jedoch ebenfalls möglich.

Zur Position der das Kipplager 11 für die Ventilscheibe 6 definierenden Stützlinie 12 kann noch nachgetragen werden, dass diese zweckmäßigerweise so gewählt wird, dass unter Berücksichtigung der vom Speisedruck und vom Steuerdruck beaufschlagbaren Ventilscheibenflächen der zum Umschalten des Ventils benötigte Steuerdruck bei etwa 50 % des Speisedruckes liegt.

Ist der zweite Steuerkanal R_{S} ständig entlüftet, liegt eine "Normalerweise offen"-Ventilfunktion vor, wobei über den ersten Steuerkanal P_{S} geschaltet wird. Eine "Normalerweise geschlossen"-Ventilfunktion kann erreicht werden, indem am ersten Steuerkanal P_{S} ständig der Steuerdruck anliegt und über den zweiten Steuerkanal R_{S} geschaltet wird.

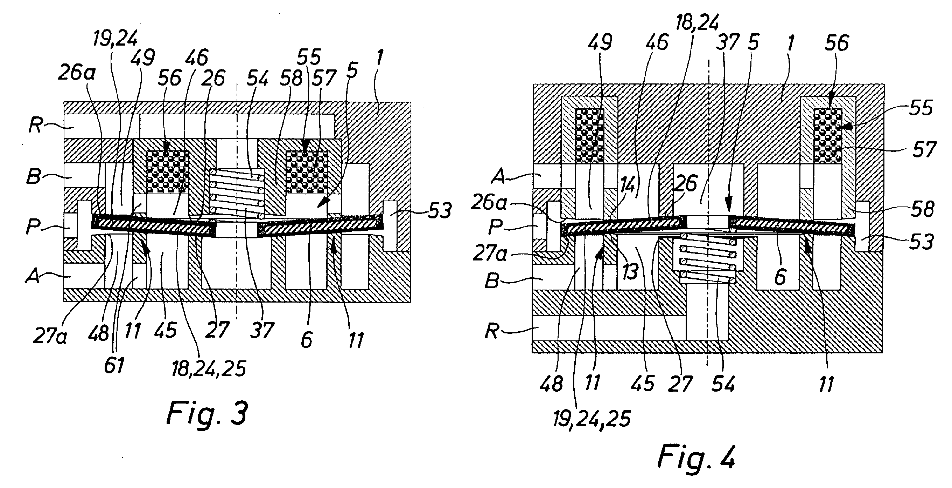

Nachfolgend werden anhand der Fig. 3 bis 10 einige weitere Ausführungsmöglichkeiten für ein erfindungsgemäßes Ventil erläutert.

Die Fig. 3 und 4 zeigen zwei Ausführungsformen eines Sitzventils mit 4/2-Wegefunktion und monostabilem Schaltverhalten. Es ist jeweils eine direkte elektrische Betätigung vorgesehen, wobei die Ventilscheibe 6 elektromagnetisch umschaltbar ist und mit ihrem ferromagnetischen Versteifungskörper 28 die Funktion eines beweglichen Magnetankers ausübt.

Abweichend von der Bauform gemäß Fig. 1 und 2 bildet nicht nur der innere Ventilscheibenabschnitt 18 einen Steuerabschnitt 24, sondern auch der äußere Ventilscheibenabschnitt 19. Diesem liegt, vergleichbar dem inneren Ventilscheibenabschnitt 18, auf beiden Axialseiten jeweils ein Ventilsitz gegenüber, wobei diese Ventilsitze zur besseren Unterscheidung als dritter und vierter Ventilsitz 26a, 27a bezeichnet seien. Sie umschließen die ersten und zweiten Ventilsitze 26, 27 konzentrisch, wobei das kreisringförmige Kipplager 11, in wiederum konzentrischer Anordnung, dazwischenliegt.

Die Ventilscheibe 6 ist zwischen zwei End-Schaltstellungen umschaltbar, in denen die beiden Ventilscheibenabschnitte 18, 19 jeweils gleichzeitig mit axial entgegengesetzt orientierten Ventilsitzen 26, 27a bzw. 27, 26a zusammenarbeiten.

Die fluidische Verschaltung ist so gewählt, dass der Zentralraum 37 mit einem Entlüftungskanal R verbunden ist. Der erste Ringraum 45 ist gemeinsam mit dem dritten Ringraum 48 an einen Arbeitskanal A angeschlossen, während die auf der entgegengesetzten Axialseite der Ventilscheibe 6 liegenden zweiten und vierten Ringräume 46, 49 gleichzeitig mit einem weiteren Arbeitskanal B verbunden sind. Schließlich ist noch ein die Ventilscheibe 6 konzentrisch umschließender fünfter Ringraum 53 vorgesehen, der radial außerhalb der dritten und vierten Ventilsitze 26a, 27a liegt und mit einem Speisekanal P verbunden ist. Diese vorgenannte Kanalbelegung gilt für die Ausführungsform der Fig. 3, von der sich diejenige der Fig. 4 nur durch eine Vertauschung der beiden Arbeitskanäle A, B unterscheidet.

In den beiden möglichen End-Schaltstellungen der Ventilscheibe 6 steht jeweils der Speisekanal P mit einem der Arbeitskanäle A oder B in Verbindung, während gleichzeitig der andere Arbeitskanal mit dem Entlüftungskanal R verbunden ist.

Das monostabile Schaltverhalten des Ventils wird durch Federmittel 54 bewirkt, die die Ventilscheibe 6 beaufschlagen. Sie arbeiten beim Ausführungsbeispiel mit dem inneren Ventilscheibenabschnitt 18 zusammen, wobei sie zweckmäßigerweise als Druckfedermittel ausgebildet sind, die sich zwischen dem Ventilgehäuse 1 und der einen Axialseite des inneren Ventilscheibenabschnittes 18 abstützen. Eine kompakte Anordnung ist möglich, wenn die Federmittel 54 in dem Zentralraum 37 platziert werden.

Die zur elektrischen Direktbetätigung der Ventilscheibe 6 dienende elektrische Betätigungseinrichtung 55 enthält eine Elektromagneteinrichtung 56 mit einer der Ventilscheibe 6 koaxial vorgelagerten Magnetspule 57. Dabei zeigen die Fig. 3 und 4 zwei Ausführungsformen mit Magnetspulen 57 unterschiedlich großer Durchmesser, wobei die Durchmesser so gewählt sind, dass die Magnetspule 57 im Falle der Fig. 3 dem inneren Ventilabschnitt 18 und im Falle der Fig. 4 dem äußeren Ventilabschnitt 19 gegenüberliegt. Eine zweckmäßigerweise der jeweiligen Magnetspule 57 zugeordnete Jocheinrichtung 58 ragt zum jeweiligen Ventilscheibenabschnitt 18, 19 und ist in der Lage, mit dem gegenüberliegenden Abschnitt des Versteifungskörpers 28 oder eines sonstigen ferromagnetischen Bestandteils der Ventilscheibe 6 einen Magnetkreis zu definieren. Dementsprechend wird der der Magnetspule 57 zugeordnete Ventilscheibenabschnitt 18 bzw. 19 bei Betätigung der Magnetspule 57 angezogen, und es findet entgegen der Rückstellkraft der Federmittel 54 ein Umschaltvorgang statt. Somit repräsentiert der mit der Magnetspule 57 zusammenarbeitende Ventilscheibenabschnitt den Betätigungsabschnitt 25.

Die Jocheinrichtung 58 kann zumindest eine der Stützflächen 14 bilden und kann auch so ausgeführt sein, dass sie einen oder mehrere Ventilsitze bildet.

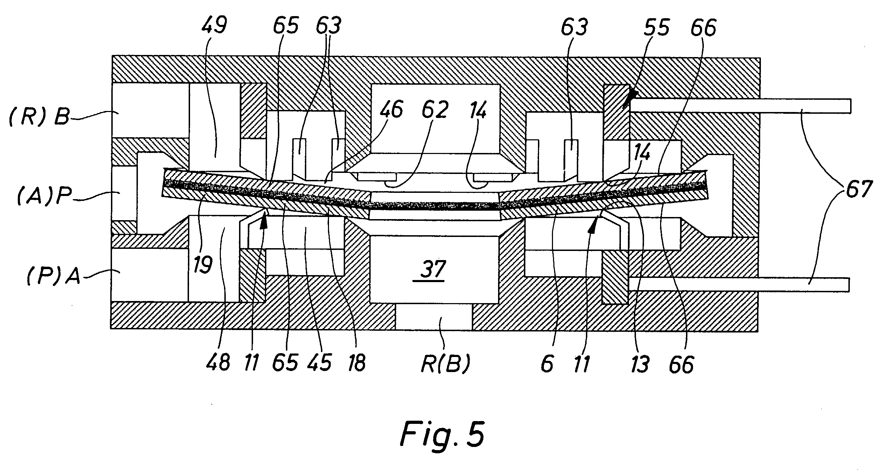

Bei dem Ventil gemäß Fig. 5 handelt es sich wiederum um ein 4/2-Wegeventil in Sitzventil-Ausführung, wobei eine piezoelektrische Umschaltung der Ventilscheibe 6 vorgesehen ist. Die fluidtechnische Ausgestaltung und dementsprechend auch die mögliche Verknüpfung der Fluidkanäle in den beiden Schaltstellungen ist die gleiche wie bei dem Ventil gemäß Fig. 3, wobei allerdings Maßnahmen für einen besonderen Druckausgleich vorgesehen sind, die es ohne weiteres ermöglichen, die Kanalbelegung zu vertauschen, wie dies in Fig. 5 exemplarisch durch in Klammern gesetzte Kanalbezeichnungen angedeutet ist. So kann man die für verschiedene Anwendungsfälle günstigste Bauform wählen.

Wie im Falle des Ventils gemäß Fig. 3 stehen die auf der gleichen Axialseite der Ventilscheibe 6 liegenden Ringräume 45, 48 bzw. 46, 49 in ständiger Fluidverbindung. Diese Verbindung kann gemäß Fig. 3 durch separate Verbindungskanäle 61 bewirkt werden oder einfach dadurch, dass man entlang der Stützlinie 12 einen Unterbrechungen aufweisenden Stützkontakt zwischen den Stützflächen 13, 14 und der Ventilscheibe 6 vorsieht, wie dies beim Ausführungsbeispiel der Fig. 5 realisiert ist. Gemäß Fig. 5 sind die beiden Stützflächen 13, 14 entlang des Verlaufes der Stützlinie 12 unterbrochen und setzen sich jeweils aus zueinander beabstandeten Stützflächenabschnitten 62 zusammen, wobei die zwischen benachbarten Stützflächenabschnitten 62 verbleibenden schlitzartigen Zwischenräume 63 die Funktion von Verbindungskanälen zwischen einem jeweiligen inneren und äußeren Ringraum übernehmen. Die unterbrochene Abstützung kann auch nur auf einer Seite der Ventilscheibe 6 vorgesehen werden.

Bei dem Ventil gemäß Fig. 5 enthält die elektrische Betätigungseinrichtung 55 eine Piezo-Einrichtung. Die im spannungsneutralen Zustand eine kegelstumpfförmige Gestalt einnehmende Ventilscheibe 6 ist axial beidseitig über beide Ventilscheibenabschnitte 18, 19 hinweg mit piezoelektrischem Material beschichtet, wobei beim Ausführungsbeispiel jeweils eine dünne Piezo-Materialschicht 65 in Gestalt einer Piezo-Keramikschicht aufgebracht und insbesondere aufgeklebt ist. Die Piezo-Materialschichten 65 sind entgegengesetzt gepolt, so dass bei angelegter Spannung eine Seite gedehnt wird, während sich die andere zusammenzieht. Damit wird ein Durchschnappen der Ventilscheibe 6 bewirkt. Mit diesem Effekt werden die sehr kleinen Verformungen des Piezomaterials verstärkt und für eine Schaltfunktion nutzbar gemacht. Die Piezo-Materialschichten können im übrigen jeweils auch einen Multilayeraufbau haben.

Zum Einleiten des elektrischen Feldes befindet sich auf jeder Piezo-Materialschicht 65 eine Elektrode 66, die im Bereich einer jeweiligen Stützfläche 13, 14 elektrisch kontaktiert ist. Jede Stützfläche 13, 14 ist zu diesem Zweck elektrisch leitend ausgebildet und mit einem nach außen geführten elektrischen Anschlusskontakt 67 verbunden, um das Einspeisen der das Umschalten der Ventilscheibe 6 bewirkenden Steuerspannung zu ermöglichen.

Indem die Ventilscheibe 6 eine bistabile Struktur hat, wird der Piezoeffekt lediglich zum Umschalten benötigt, während die Schließkraft von der internen mechanischen Vorspannung der Ventilscheibe 6 hervorgerufen wird.

Unterstützt man die Ventilscheibe 6 mit einem Kipplager 11 auf einem Durchmesser, bei dem die äußeren und inneren Kippmomente aus den Druckkräften auf die Ventilscheibe ausgeglichen sind, muss beim Umschalten keine Druckkraft überwunden werden, und man kann nahezu den gesamten Weg der Scheibe für die Schaltfunktion nutzen.

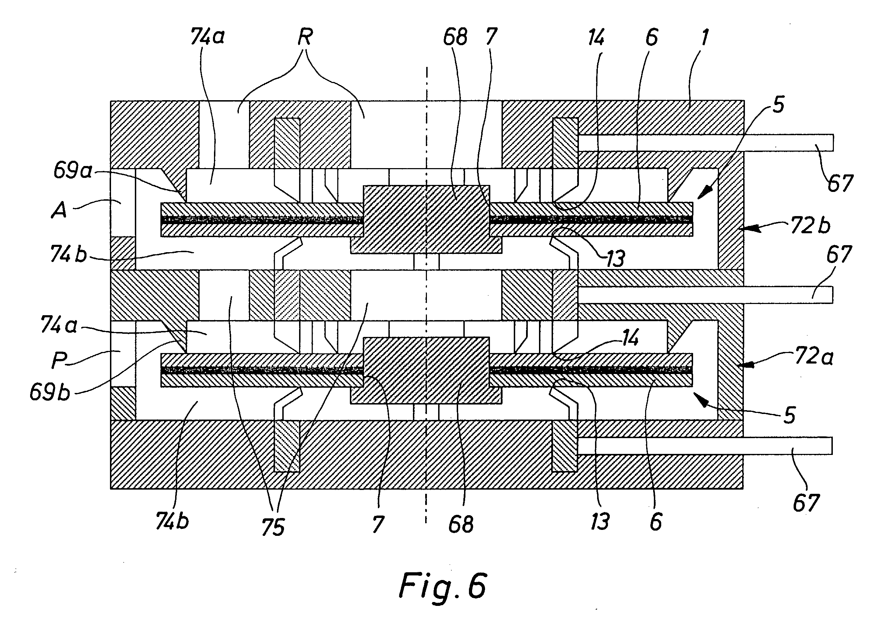

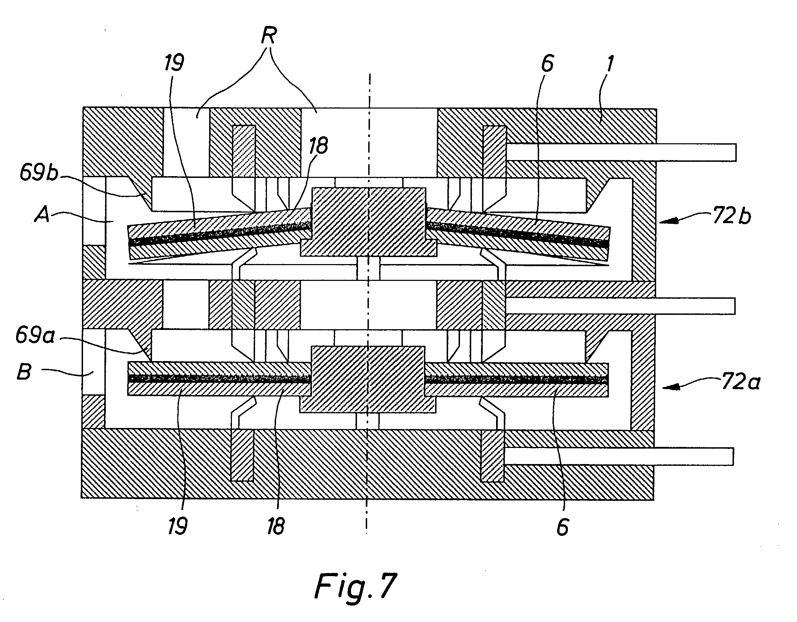

Die Fig. 6 und 7 zeigen ebenfalls ein piezoelektrisch betätigbares Ventil, allerdings in einer Ausgestaltung als Proportionalventil mit 3/3-Ventilfunktion. Der Aufbau entspricht praktisch einer axialen Aufeinanderschichtung zweier Ventile der in Fig. 5 gezeigten Art, so dass im Innern des Ventilgehäuses 1 zwei Ventilscheiben 6 mit zueinander koaxialer Anordnung untergebracht sind. Das Ventil enthält also praktisch zwei Ventileinheiten 72a, 72b. Abweichend zu den bisher beschriebenen Ausführungsformen sind die Ventilscheiben 6 allerdings durchgehend geschlossen ausgebildet, was durch Platzierung eines Verschlusskörpers 68 in dem zentralen Loch 7 erreicht wird.

Die elektrische Kontaktierung der auf den einander zugewandten Axialseiten befindlichen Piezo-Materialschichten 65 der beiden Ventilscheiben 6 kann über einen gemeinsamen elektrischen Anschlusskontakt 67 erreicht werden, der gleichzeitig mit den entsprechenden Stützflächen 13, 14 elektrisch verbunden ist.

Bei dem Ventil gemäß Fig. 6 und 7 ist jeder Ventilscheibe 6 nur ein Ventilsitz 69a, 69b zugeordnet, der so platziert ist, dass er mit dem äußeren Ventilscheibenabschnitt 19 zusammenarbeiten kann. Die Ventilsitze 69a, 69b befinden sich außerdem zweckmäßigerweise auf den axial gleichgerichteten Axialseiten der Ventilscheiben 6.

Liegen die Ventilscheiben 6 der beiden Ventileinheiten 72a, 72b des Ventils am zugeordneten Ventilsitz 69a, 69b an, ist die jeweilige Ventilkammer 5 in zwei voneinander fluiddicht abgetrennte Teilkammern 74a, 74b unterteilt. Die erste Teilkammer 74a befindet sich innerhalb des vom zugeordneten Ventilsitz 69a, 69b umgrenzten Bereiches, die zweite Teilkammer 74b außerhalb desselben. Die fluidische Verschaltung innerhalb des Ventilgehäuses 1 ist so getroffen, dass ein Speisekanal P an die zweite Teilkammer 74b der ersten Ventileinheit 72a angeschlossen ist, während ein Arbeitskanal A mit der zweiten Teilkammer 74b der zweiten Ventileinheit 72b verbunden ist, welche über mindestens einen Verbindungskanal 75 mit der ersten Teilkammer 74a der ersten Ventileinheit 72a in ständiger Verbindung steht. Die erste Teilkammer 74a der zweiten Ventileinheit 72b ist an mindestens einen Entlüftungskanal R angeschlossen.

Indem nun die Ventilscheiben 6 in aufeinander abgestimmter Weise ausgelenkt werden - die Fig. 7 zeigt einen möglichen Schaltzustand bei geschlossener erster Ventileinheit 72a und geöffneter zweiter Ventileinheit 72b -, lässt sich die gewünschte Proportionalfunktion realisieren.

Man kann sich das Ventil gemäß Fig. 6 und 7 auch als Zusammenschaltung zweier Ventileinheiten 72a, 72b vorstellen, die jeweils als druckausgeglichenes 2/2-Wege-Sitzventil ausgebildet sind.

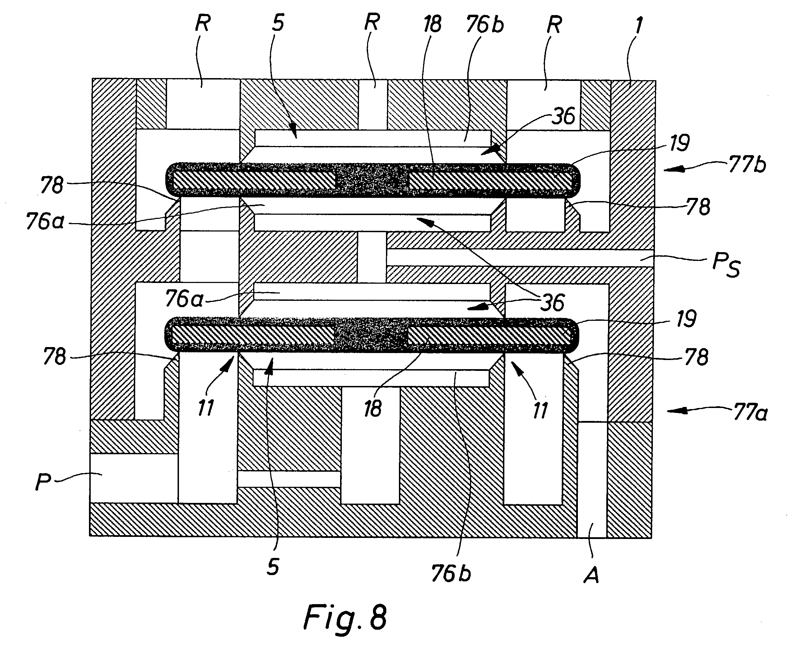

Bei dem in Fig. 8 bis 10 in verschiedenen Schaltstellungen gezeigten Ventil handelt es sich wiederum um ein 3/3-Wege-Proportionalventil, allerdings mit Betätigung durch Fluidkraft. Die jeweilige Schaltstellung kann durch einen Steuerdruck beeinflusst werden, der über einen Steuerkanal P_{S} gleichzeitig beiden Ventilscheiben 6 aufgeschaltet werden kann. Die Aufschaltung erfolgt auf den einander zugewandten Axialseiten der inneren Ventilscheibenabschnitte 18, die hier als kreisscheibenförmige Abschnitte ausgebildet sind, weil die Ventilscheibe 6 nicht durchbrochen ist. Anders als im Falle des Ventils gemäß Fig. 6 und 7 ist dabei kein durch einen separaten Verschlusskörper verschlossenes zentrales Loch vorhanden, sondern eine einheitliche geschlossene Bauform realisiert, wobei der bei den übrigen Bauformen vom zentralen Loch 7 eingenommene Bereich durch das Material der Ummantelung 29 ausgefüllt ist.

Bei dem Ventil gemäß Fig. 8 bis 10 bildet der den jeweiligen inneren Ventilscheibenabschnitt 18 aufnehmende Bereich der Ventilkammer 5 eine Betätigungskammer 36, die vom inneren Ventilscheibenabschnitt 18 in jeweils eine erste und eine zweite Teilkammer 76a, 76b unterteilt ist. Die auf einander zugewandten Seiten der Ventilscheibe 6 liegenden ersten Teilkammern 76a sind mit dem Steuerkanal P_{S} verbunden. Die entgegengesetzt liegenden zweiten Teilkammern 76b stehen bei der die eine Ventilscheibe 6 enthaltenden ersten Ventileinheit 77a mit dem Speisekanal P und im Falle der zweiten Ventileinheit 77b mit einem Entlüftungskanal R in Verbindung.

Jede Ventileinheit 77a, 77b ist wiederum als 2/2-Wegeventil ausgebildet, wobei in der aus Fig. 8 hervorgehenden Schließstellung beider Ventileinheiten 77a, 77b der äußere Ventilscheibenabschnitt 19 jeder Ventilscheibe 7 mit Dichtkontakt an einem das Kipplager 11 konzentrisch umgebenden Ventilsitz 78 anliegt. Der außerhalb des Ventilsitzes 78 liegende Bereich der Ventilkammer 5 der ersten Ventileinheit 77a steht zum einen mit einem Arbeitskanal A in Verbindung und führt zum anderen zu dem innerhalb des Ventilsitzes 78 liegenden Bereich der zweiten Ventileinheit 77b. Deren außerhalb des Ventilsitzes 78 liegender Bereich ist wiederum mit mindestens einem Entlüftungskanal R verbunden.

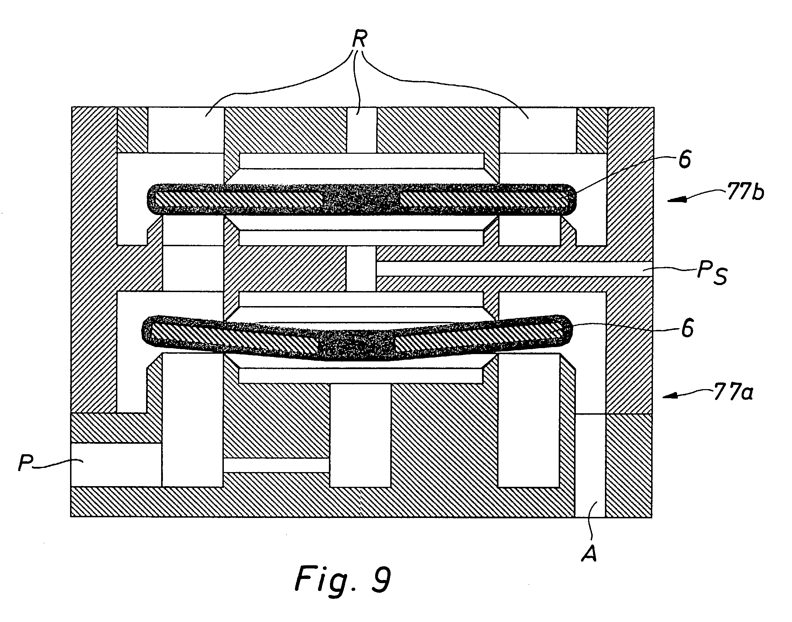

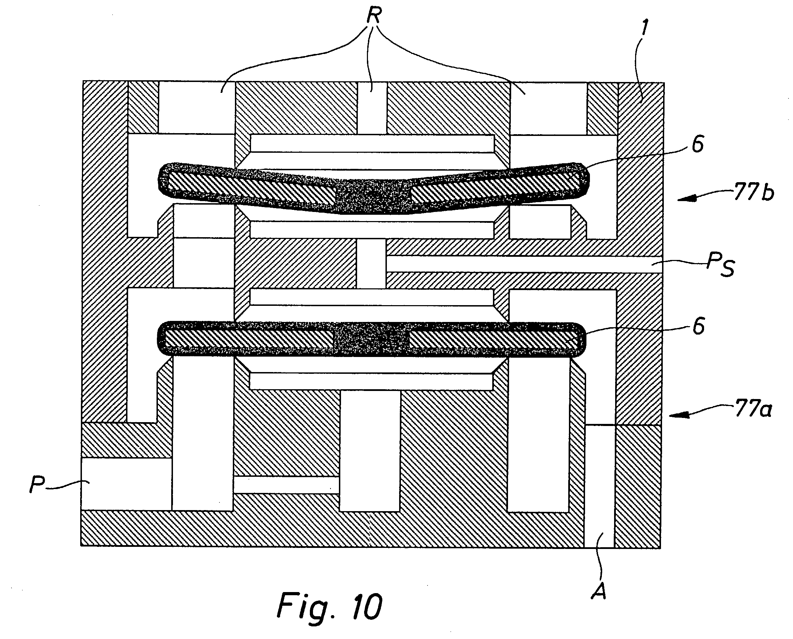

Die Betätigung der Ventilscheiben 6 kann durch aufeinander abgestimmte Druckbeaufschlagung zum einen über den Steuerkanal P_{S} und zum anderen über den Speisekanal P erfolgen. Die Fig. 8 zeigt einen Zustand bei abgesperrtem Arbeitskanal A. Im Falle der Fig. 9 ist der Arbeitskanal A auf Grund des geöffneten Zustandes der ersten Ventileinheit 77a mit dem Speisekanal P verbunden, wobei sich die zweite Ventileinheit 77b im Schließzustand befindet. Im Falle der Fig. 10 ist die erste Ventileinheit 77a geschlossen und die zweite Ventileinheit 77b geöffnet, so dass der Arbeitskanal A unter Abtrennung vom Speisekanal P mit dem Entlüftungskanal R verbunden ist.

Zu dem erfindungsgemäßen Ventil ist allgemein noch nachzutragen, dass man den durch die Kippbewegung der Ventilscheibe stattfindenden Schaltvorgang auch als Umstülpvorgang bezeichnen könnte.

## Patentansprüche

1. Ventil zur Fluidsteuerung, mit mindestens einer Ventilscheibe (6) als Ventilglied, die mit mindestens einem Ventilsitz (26, 27, 26a, 27a, 69a, 69b, 78) zusammenarbeiten kann und die mit radialem Abstand zu ihrem Außenumfang (8) entlang einer in sich geschlossenen Stützlinie (12) axial abgestützt ist, so dass sie beim Schaltvorgang eine Kippbewegung bezüglich der Stützlinie (12) ausführt, wobei eine axial entgegengesetzt gerichtete Auslenkung (22, 23) der innerhalb und außerhalb der Stützlinie (12) liegenden inneren und äußeren Ventilscheibenabschnitte (18, 19) stattfindet.

2. Ventil nach Anspruch 1, **dadurch gekennzeichnet, dass** die Stützlinie (12) eine Kreislinie ist.

3. Ventil nach Anspruch 1 oder 2, **dadurch gekennzeichnet, dass** die Stützlinie (12) konzentrisch zur Ventilscheibe (6) angeordnet ist.

4. Ventil nach einem der Ansprüche 1 bis 3, **dadurch gekennzeichnet, dass** die Ventilscheibe (6) entlang der Stützlinie (12) durchgehend oder mit Unterbrechungen abgestützt ist.

5. Ventil nach einem der Ansprüche 1 bis 4, **dadurch gekennzeichnet, dass** die Ventilscheibe (6) von entgegengesetzten Axialseiten her zwischen zwei im Bereich der Stützlinie (12) angeordneten ventilgehäusefesten Stützflächen (13, 14) abgestützt ist, die zweckmäßigerweise von Stützvorsprüngen (16, 17) gebildet sind.

6. Ventil nach einem der Ansprüche 1 bis 5, **dadurch gekennzeichnet, dass** die Ventilscheibe (6) durchgehend geschlossen ausgebildet ist.

7. Ventil nach einem der Ansprüche 1 bis 5, **dadurch gekennzeichnet, dass** die Ventilscheibe (6) nach Art einer Lochscheibe mit einem offenen zentralen Loch (7) ausgebildet ist.

8. Ventil nach einem der Ansprüche 1 bis 7, **dadurch gekennzeichnet, dass** die Ventilscheibe (6) im mechanisch spannungsneutralen Zustand eine ebene Gestalt oder eine zu einer Axialseite insbesondere kegelstumpfartig ausgewölbte Gestalt aufweist.

9. Ventil nach einem der Ansprüche 1 bis 8, **dadurch gekennzeichnet, dass** dem inneren Ventilscheibenabschnitt (18) und/oder dem äußeren Ventilscheibenabschnitt (19) auf wenigstens einer Axialseite ein Ventilsitz (26, 27, 26a, 27a, 69a, 69b, 78) gegenüberliegt, bezüglich dem sich der betreffende Ventilscheibenabschnitt bei der Kippbewegung der Ventilscheibe (6) annähert oder entfernt.

10. Ventil nach einem der Ansprüche 1 bis 9, **dadurch gekennzeichnet, dass** die Ventilscheibe (6) einen ein bistabiles Schaltverhalten bewirkenden Aufbau hat, insbesondere derart, dass sie zwei stabile Schaltstellungen aufweist, in denen die Ventilscheibenabschnitte (18, 19) mit Bezug zu einer Mittellage, in der die beiden Ventilscheibenabschnitte (18, 19) in einer gemeinsamen Ebene verlaufen, zu jeweils einer Axialseite ausgelenkt sind.

11. Ventil nach einem der Ansprüche 1 bis 10, **dadurch gekennzeichnet, dass** die Ventilscheibe (6) einen in eine aus Elastomermaterial oder Gummi bestehende Ummantelung (29) eingebetteten ringscheibenförmigen Versteifungskörper (28) aufweist, der zweckmäßigerweise aus Metall besteht.

12. Ventil nach Anspruch 11, **dadurch gekennzeichnet, dass** der Versteifungskörper (28) eine Vielzahl in Umfangsrichtung der Ventilscheibe (6) benachbarter, jeweils durch einen Verbindungssteg (33) miteinander verbundener und radial ausgerichteter Versteifungsarme (32) aufweist, wobei die Verbindungsstege (33) zweckmäßigerweise am äußeren radialen Randbereich des Versteifungskörpers (28) vorgesehen sind.

13. Ventil nach einem der Ansprüche 1 bis 12, **gekennzeichnet durch** zwei axial beidseits des inneren und/oder äußeren Ventilscheibenabschnittes (18, 19) angeordnete und zur Ventilscheibe (6) koaxiale Ventilsitze (26, 27, 26a, 27a, 69a, 69b, 78), mit denen die Ventilscheibe (6) in Abhängigkeit von ihrer Schaltstellung alternativ zusammenarbeiten kann.

14. Ventil nach einem der Ansprüche 1 bis 13, **gekennzeichnet durch** eine Bauform mit **durch** Fluidkraft umschaltbarer Ventilscheibe (6), wobei die axial orientierten Flächen des inneren oder äußeren Ventilscheibenabschnittes (18, 19) zur Fluidbeaufschlagung vorgesehene Betätigungsflächen bilden und wobei zweckmäßigerweise der entsprechende Ventilscheibenabschnitt (18, 19) randseitig zum Ventilgehäuse (1) hin abgedichtet ist.

15. Ventil nach einem der Ansprüche 1 bis 14, **gekennzeichnet durch** eine Bauform mit elektromagnetisch umschaltbarer Ventilscheibe (6), wobei die Ventilscheibe (6) zumindest partiell aus eine Magnetankerfunktion ausübendem Metall besteht.

16. Ventil nach einem der Ansprüche 1 bis 15, **gekennzeichnet durch** eine Bauform mit piezoelektrisch umschaltbarer Ventilscheibe (6), wobei die Ventilscheibe (6) auf einer oder beiden Axialseiten mit piezoelektrischem Material beschichtet ist.

17. Ventil nach einem der Ansprüche 1 bis 16, **dadurch gekennzeichnet, dass** die Stützlinie (12) so platziert ist, dass die im Betrieb aus den vorhandenen Druckkräften herrührenden und auf die beiden Ventilscheibenabschnitte (18, 19) einwirkenden Kippmomente ausgeglichen sind.

18. Ventil nach einem der Ansprüche 1 bis 17, **gekennzeichnet durch** mehrere Ventilscheiben (6) mit zueinander insbesondere koaxialer Anordnung.

19. Ventil nach einem der Ansprüche 1 bis 18, **gekennzeichnet durch** eine Ausgestaltung als Schaltventil oder als Proportionalventil.
